# EUROPÄISCHE PATENTSCHRIFT

(11) **EP 3 768 545 B1**
(45) Veröffentlichungstag und Bekanntmachung des Hinweises auf die Patenterteilung: **10.04.2024**
(21) Anmeldenummer: 19706954.5
(22) Anmeldetag: 19.02.2019
(51) Int. Cl.: B60K 37/00, G06F 3/023, B60K 35/00, H01H 9/00

(54) **MODUL MIT MEHREREN BEDIENELEMENTEN**
MODULE WITH A PLURALITY CONTROL ELEMENTS
MODULE COMPORTANT PLUSIEURS ÉLÉMENTS DE COMMANDE

(30) Priorität: 23.03.2018 DE 102018204471
(43) Veröffentlichungstag der Anmeldung: 27.01.2021
(73) Patentinhaber: VOLKSWAGEN AKTIENGESELLSCHAFT, 38440 Wolfsburg (DE)
(72) Erfinder: BORK, Simon, 38547 Calberlah (DE); OONG, Alexander, 40477 Düsseldorf (DE); PETTER, Niels, 45133 Essen (DE); MEIERLING, Klaus, 44879 Bochum (DE)
(86) Internationale Anmeldenummer: PCT/EP2019/054125
(87) Internationale Veröffentlichungsnummer: WO 2019/179708

(56) Entgegenhaltungen:
- DE-A1-102006 047 893
- DE-A1-102010 007 486
- DE-A1-102011 012 838
- DE-A1-102012 020 022
- DE-A1-102015 009 313
- US-A1- 2009 079 712

## Beschreibung

Die vorliegende Erfindung betrifft ein Modul mit mehrere Bedienelementen für Fahrzeugkomponente.

Die steigende Anzahl unterschiedlicher Funktionen und Komponenten im Fahrzeug sowie deren immer weiter zunehmende Komplexität hat zu einer Vielzahl von Bedienelementen geführt. Neben neuen Bedienkonzepten, wie beispielsweise Sprach- oder Gestensteuerungen, kommen weiterhin mechanische Bedienelemente in Form von Bedienknöpfen, Tasten und Schalter zum Einsatz.

Die Vielzahl unterschiedlicher Beschriftungen für unterschiedliche Fahrzeugfunktionen und - komponenten sowie die unterschiedlichen Designs der verschiedenen Fahrzeughersteller und -modelle resultiert hierbei, selbst bei gleichem mechanischen Design und Abmessungen, zu einer große Anzahl von Varianten dieser mechanischen Bedienelemente, was u.a. zusätzlichen Aufwand bei der Produktion und Lagerhaltung verursacht. Weiterhin nimmt, zumindest bei einer Bedienung der Vielzahl an Fahrzeugfunktionen und - komponenten ausschließlich oder überwiegend durch mechanische Bedienelemente, deren Anzahl weiterhin zu. Dieses ist neben der Funktionsvielfalt insbesondere auch der Fall, weil zur Sicherstellung von Bedienkomfort und Bediensicherheit eine Taste typischerweise nur eine, nämlich die auf ihr wiedergegebene, Funktion hat und ein Teil der Tasten nur unter bestimmten Bedingungen anwendbar ist, wie beispielsweise das Ein- / Ausschalten eines Tempomaten nur während der Fahrt oder das Ein- / Ausschalten der Handbremse nur bei Stillstand des Fahrzeugs. Ebenso kann eine Verwendung einer Vielzahl mechanischer Bedienelemente störend beim Design des Fahrzeuginteriors sein bzw. dieses verkomplizieren.

Um die Anzahl mechanischer Bedienelemente zu reduzieren, können diese so ausgestaltet sein, dass ihnen durch eine Umprogrammierung mehrere unterschiedliche Funktionen zugewiesen werden können. So offenbart die GB 2481597 A ein programmierbares Anzeigesystem, das im Inneren eines Fahrzeugs, beispielsweise eines Rettungsfahrzeugs, vorgesehen ist und eine Benutzersteuerung von Systemen des Fahrzeugs ermöglicht. Das beschriebene Gerät hat mechanische Tasten, die jeweils ein OLED-Anzeigefeld zum Anzeigen der einer Taste zugewiesenen Funktion mittels eines Bildes oder Symbols aufweisen. Die Funktionalität der Tasten und der angezeigten Bilder bzw. Symbole ist programmierbar, so dass bei einer geänderten Funktionalität einer Taste ein anderes Bild oder Symbol angezeigt werden kann.

Die DE 10 2015 009313 A1 betrifft eine Bedienvorrichtung für ein Kraftfahrzeug, umfassend eine Bedieneinrichtung; einen Aktor, der einen mit der Bedieneinrichtung gekoppelten Anker und zumindest zwei Wicklungseinheiten aufweist, welche dazu ausgebildet sind, jeweilige Magnetfelder zum Auslenken des relativbeweglich zu den Wicklungseinheiten gelagerten Ankers zu erzeugen, wobei sich die Wicklungseinheiten zumindest bezüglich einer Eigenschaft unterscheiden; eine Steuereinrichtung, welche dazu ausgebildet ist, die Wicklungseinheiten in Abhängigkeit von einer erfassten Betätigung der Bedieneinrichtung zum Erzeugen der jeweiligen Magnetfelder anzusteuern, um wenigstens eine haptisch erfassbare Rückmeldung an der Bedieneinrichtung zu bewirken.

Es ist eine Aufgabe der Erfindung, ein Modul für ein Fahrzeug mit demgegenüber verbessertem Bedienkomfort bzw. verbesserter Bediensicherheit, sowie ein Modul mit mehreren solchen Bedienelementen zur Verfügung zu stellen.

Diese Aufgabe wird durch ein Modul mit den Merkmalen des Anspruchs 1 gelöst. Bevorzugte Ausgestaltungen der Erfindung sind Gegenstand der abhängigen Ansprüche.

Durch die erfindungsgemässe haptische Rückmeldung wird die Interaktion zwischen Fahrzeugnutzer und Fahrzeug verbessert. So kann eine Rückmeldung an den Fahrzeugnutzer selbst dann gegeben werden, wenn die elektronische Anzeigeeinheit nicht einsehbar ist, beispielsweise weil sie durch einen Finger des Fahrzeugnutzers verdeckt wird. Vielmehr kann die Rückmeldung ohne eine Veränderung der dem Bedienelement zugeordneten Anzeige erfolgen. Wird die Betätigungseinheit durch den Fahrer des Fahrzeugs betätigt, senkt dieses die Fahrerablenkung und erhöht damit die Fahrsicherheit, da der Fahrer wegen der Wahrnehmung der haptische Rückmeldung seinen Blick nicht von der Straße nehmen muss.

Vorzugsweise wird hierbei in Reaktion auf eine Betätigung der Betätigungseinheit das Bedienelement derart umprogrammiert, dass eine von der ersten Anzeige verschiedene zweite Anzeige auf der elektronischen Anzeigeeinheit dargestellt und/oder eine von der ersten haptischen Rückmeldung verschiedene zweite haptische Rückmeldung erzeugt wird.

Gemäß einer Ausführungsform der Erfindung ist die elektronische Anzeigeeinheit als OLED-, MicroLED oder LCD-Display ausgestaltet.

Vorzugsweise wird auf der elektronischen Anzeigeeinheit ein Bildsymbol dargestellt, das eine dem Bedienelement zugeordnete Funktion wiedergibt.

Weiterhin ist vorteilhafterweise das Stellglied zur Erzeugung einer haptischen Rückmeldung als Piezoaktuator, Vibrationsmotor oder ein anderes mechanisch verformbares Element ausgestaltet.

Gemäß einer Ausführungsform der Erfindung weist die Betätigungseinheit einen Kraftsensor oder Annäherungssensor zur Erfassung der Betätigung durch den Fahrzeugnutzer auf.

Gemäß einer weiteren Ausführungsform der Erfindung ist die elektronische Anzeigeeinheit als berührungsempfindlicher Bildschirm ausgestaltet, wobei die Betätigung durch den Fahrzeugnutzer mittels einer Berührung des berührungsempfindlichen Bildschirms erfolgt. Gemäß einer nochmals weiteren Ausführungsform der Erfindung ist die Betätigungseinheit als mechanischer Druckknopf ausgestaltet ist.

Weiterhin betrifft die Erfindung auch ein Modul für ein Fahrzeug mit mehreren Bedienelementen. Ein solches Modul hat unter anderem den Vorteil, dass mehrere Bedienelemente in einem Arbeitsschritt gemeinsam bzw. gleichzeitig eingebaut werden können, was die Montage vereinfacht und die Montagezeit verringert.

Vorteilhafterweise weisen die einzelnen Bedienelemente jeweils ein separates Bedienelementgehäuse auf, wobei die Bedienelementgehäuse voneinander separiert in einem gemeinsamen Modulgehäuse angeordnet sind.

Schließlich ist vorteilhafterweise eine Steuereinheit vorgesehen mittels der die mehreren Bedienelemente separat angesteuert werden können und welches das elektrische Steuersignal erzeugt.
- Fig. 1: zeigt eine Frontansicht (a) und Rückansicht (b) eines erfindungsgemäßen Bedienelements;
- Fig. 2: zeigt ein erfindungsgemäßes Modul am Beispiel von sechs Bedienelementen in einer 2 x 3 Anordnung mit zugehörigem Modulgehäuse;
- Fig. 3: zeigt schematisch einen seitlichen Querschnitt durch Modul aus Figur 2;
- Fig. 4: zeigt schematisch das im Innenraum eines Fahrzeugs verbautes Modul aus Figur 2;
- Fig. 5: zeigt schematisch für ein erstes Anwendungsbeispiel die Veränderung der unterschiedlichen Anzeigen auf den elektronischen Anzeigeeinheiten der Bedienelemente; und
- Fig. 6: zeigt schematisch für ein zweites Anwendungsbeispiel die Veränderung der unterschiedlichen Anzeigen auf den elektronischen Anzeigeeinheiten der Bedienelemente.

Zum besseren Verständnis der Prinzipien der vorliegenden Erfindung werden nachfolgend Ausführungsformen der Erfindung anhand der Figuren detaillierter erläutert.

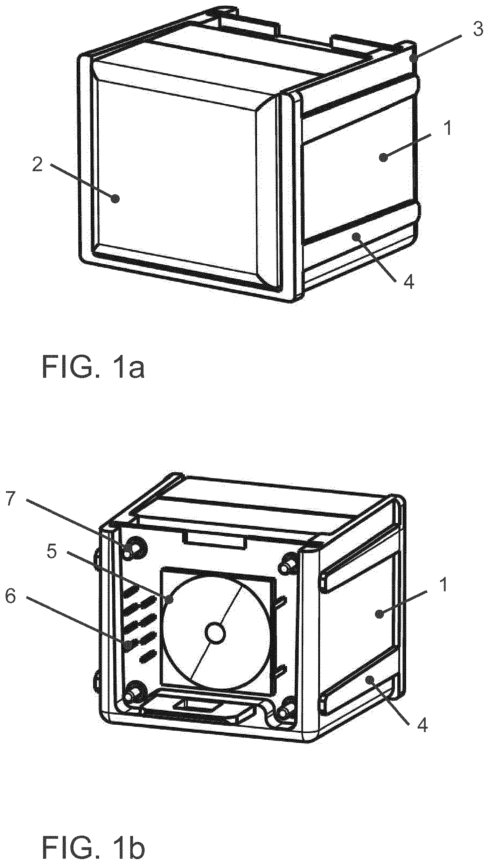

Figur 1 zeigt eine Ausführungsform eines erfindungsgemäßen Bedienelements 1. Auf der Vorderseite des Bedienelements 1 ist eine elektronische Anzeigeeinheit angeordnet, wie in der Figur 1a dargestellt. Die elektronische Anzeigeeinheit kann hierbei insbesondere als MicroLED-, OLED- oder LCD-Display ausgestaltet sein, ebenso sind aber auch andere Displaytypen geeignet, die eine geringe Einbautiefe haben. Vorzugsweise ermöglicht die elektronische Anzeigeeinheit eine RGB-Farbanzeige, eine monochrome Anzeige ist aber ebenso denkbar. Weiterhin hat die Anzeige eine ausreichende Anzahl an Bildpunkten, z.B. 64 x 64 oder 96 x 64 Pixel, um unterschiedliche Symbole gut erkennbar darstellen zu können. Für die Darstellung verschiedener Symbole, gleichzeitig auf mehreren Bedienelementen oder nacheinander auf dem gleichen Bedienelement, kann die Anzeige auf der elektronischen Anzeigeeinheit frei programmiert werden. Die einzelnen Komponenten des Bedienelements 1 sind in einem Gehäuse 3 angeordnet, dass an der Außenseite Führungen 4 zur spielfreien Befestigung in einem weiter unten beschriebenen Modulgehäuse aufweist. Ebenso können für die Fixierung des Bedienelements 1 aber auch andere Befestigungselemente vorgesehen sein.

Figur 1b zeigt eine Rückansicht des erfindungsgemäßen Bedienelements. Als Stellglied zur Erzeugung einer haptischen Rückmeldung ist ein Piezoaktuator 5 vorgesehen, wobei die Ausgestaltung der haptischen Rückmeldung beispielsweise bzgl. Stärke, Dauer und Frequenz ebenfalls frei programmierbar sein kann. Der Piezoaktuator 5 kann aus mehreren Piezoplatten bestehen um so einerseits mit relativ niedrigen Betriebsspannungen betrieben werden zu können und die Ausdehnung bei Anlegen der Betriebsspannung zu vergrößern. Zusätzlich kann die Ausdehnung bzw. Kontraktion durch eine Hebelwirkung weiter verstärkt werden. Weiterhin kann in dem Piezoaktuator 5 auch eine Sensorfunktionalität zur Erfassung der Betätigung durch den Nutzer integriert sein. Für die elektrische Kontaktierung des Bedienelements sind elektrische Kontakte 6 vorgesehen. Schließlich sorgen Stifte 7 in den Ecken der Rückseite zum weiteren Zentrieren und Führen in dem Modulgehäuse.

Das erfindungsgemäße Bedienelement ermöglicht damit einerseits das dargestellte Symbol bzw. Bild, aber auch dessen Farbgestaltung und Helligkeit entsprechend dem Fahrzeugmodell, dem ausgewählten Menü und/oder dem Zustand der Auswahl zu wählen. Ebenso kann auch die haptische Rückmeldung bzw. die taktile Wahrnehmung für den Nutzer beispielsweise abhängig von der Funktion des jeweiligen Bedienelements erfolgen. Insbesondere kann hierbei in Reaktion auf eine Betätigung einer Betätigungseinheit des Bedienelements die Anzeige und/oder haptische Rückmeldung durch eine Umprogrammierung angepasst werden.

Ferner weist das Bedienelement eine Betätigungseinheit auf, die bei Betätigung des Bedienelements durch den Nutzer zum Erzeugen eines elektrischen Steuersignals für die bediente Fahrzeugkomponente bzw. -funktion führt, das dann zur weiteren Verarbeitung zunächst einer Steuereinheit zugeführt werden kann.

In der in Figur 1 dargestellten Ausführungsform kann die Betätigungseinheit als mechanischer Druckknopf bzw. Druckschalter ausgestaltet sein, aber auch eine Ausgestaltung in Form anderer mechanische Schalter ist möglich. Ebenso kann die elektronische Anzeigeeinheit als berührungsempfindlicher Bildschirm, sogenannter Touchscreen, ausgestaltet sein und die Betätigung durch den Fahrzeugnutzer mittels einer Berührung des berührungsempfindlichen Bildschirms erfolgen. Weiterhin dann die Betätigung durch den Fahrzeugnutzer beispielsweise auch durch einen integrierten Kraftsensor oder Annäherungssensor erfasst werden. Je nach Ausgestaltung der Betätigungseinheit sind hierbei verschiedene Bedienformen möglich. So ist es beispielsweise bei Verwendung eines Kraftsensors möglich durch stärkeres Drücken auf den Druckknopf Doppelklicks zu emulieren und eine erkannte Betätigung durch eine Vibration zu bestätigen. Weiterhin kann vorgesehen sein, das Stellglied erst auf eine detektierte Betätigung der Betätigungseinheit durch den Fahrzeugnutzer zu aktivieren.

Das erfindungsgemäße Bedienelement kann einzeln im Fahrzeug verbaut werden. Insbesondere können aber mehrere Bedienelemente zusammengefasst werden und dann ggfs. auch abhängig vom ausgewählten Menü und / oder der aktuellen Situation eine zusammengehörende Benutzeroberfläche darstellen. Hierbei sind die einzelnen Bedienelemente dennoch physisch getrennt, wobei jedes Bedienelement jeweils nur eine Funktion trägt. Dieses erleichtert dem Fahrzeugnutzer die Bedienung, da er wie gewohnt einen einzelnen Druckknopf zum Ausführen einer bestimmten Funktion drückt, so dass dieses ggfs. auch möglich ist ohne den jeweiligen Druckknopf zu betrachten.

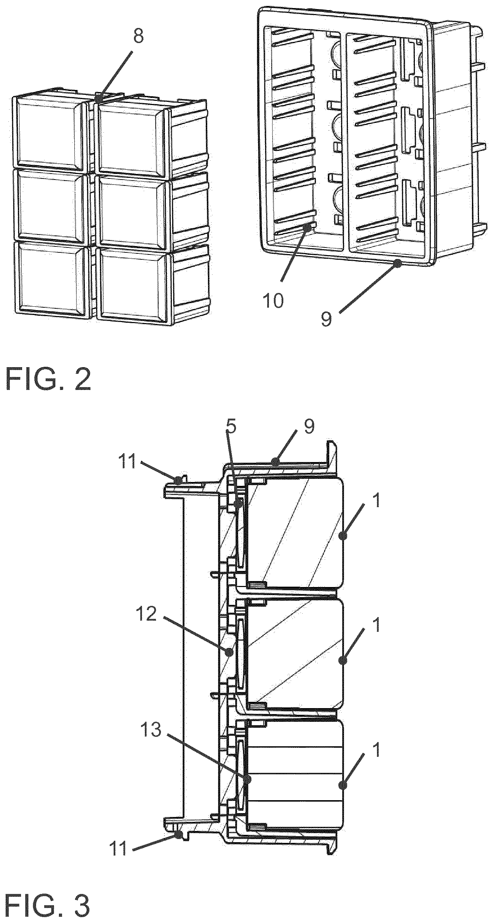

Ein Modul 8 von sechs Bedienelementen in einer 2 x 3 Anordnung mit zugehörigem Modulgehäuse 9 ist in Figur 2 gezeigt. Jede der Bedienelemente kann separat programmiert und angesteuert werden. Daher können die Bedienelemente grundsätzlich in beliebiger Anordnung und Anzahl zusammengefasst werden. So ist eine matrixförmige Anordnung mit einem oder mehreren Bedienelementen nebeneinander und einem oder mehreren Bedienelementen übereinander häufig zweckmäßig, statt einer solchen rechteckigen Anordnung kann aber je nach Verbauort im Fahrzeug auch eine andersförmige Anordnung sinnvoll sein. Ebenso ist die Anzahl der Bedienelemente abhängig vom verfügbaren Raum am Verbauort und muss auch auf die Leistungsfähigkeit der Steuereinheit abgestimmt sein.

Die einzelnen Bedienelemente des Moduls werden in einem Modulgehäuse 9 angeordnet, das Schienen 10 aufweist, die so auf die an der Außenseite der Bedienelementgehäuse befindlichen Führungen zusammenwirken, dass eine spielfreie Befestigung erfolgt. Weiterhin weist das Modulgehäuse an der Rückseite Bohrungen für Kabel, Stecker oder Anschlussklemmen auf.

Ferner sind, wie in dem in Figur 3 dargestellten seitlichen Querschnitt durch das Modul und Modulgehäuse gezeigt, an dem Modulgehäuse 9 an der Außenseite Befestigungselemente 11 wie beispielsweise Rastelemente, die in entsprechende Aussparrungen der Fahrzeuginnenverkleidung einrasten können, vorgesehen. Ein hebelförmige Ausgestaltung 12 hinter dem jeweiligen Piezoaktuator 5 ermöglicht eine Verstärkung der durch den Piezoaktuator erzeugten haptischen Rückmeldung. Weiterhin ist ein Kraftsensor 13 vorgesehen, der den durch den Fahrzeugnutzer auf das jeweilige Bedienelement ausgeübten Druck erfasst.

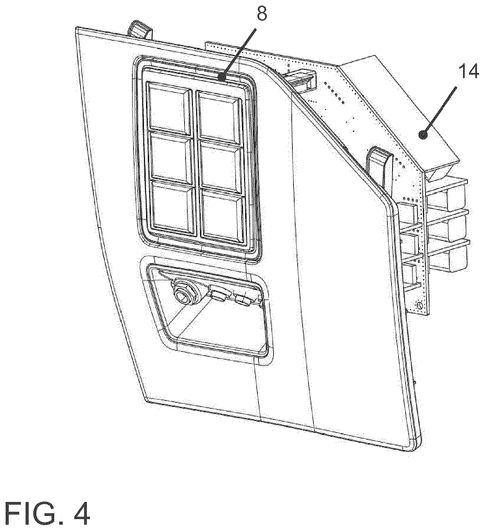

Figur 4 zeigt schematisch wie ein solches Modul im Innenraum eines Fahrzeugs, vorzugsweise in einem Bereich, der von dem Fahrzeugnutzer gut erreichbar ist, wie beispielsweise im Bereich der Mittelkonsole, verbaut werden kann. Hinter dem Modul ist eine Steuereinheit 14 angedeutet, die die einzelnen Bedienelemente des Moduls ansteuert.

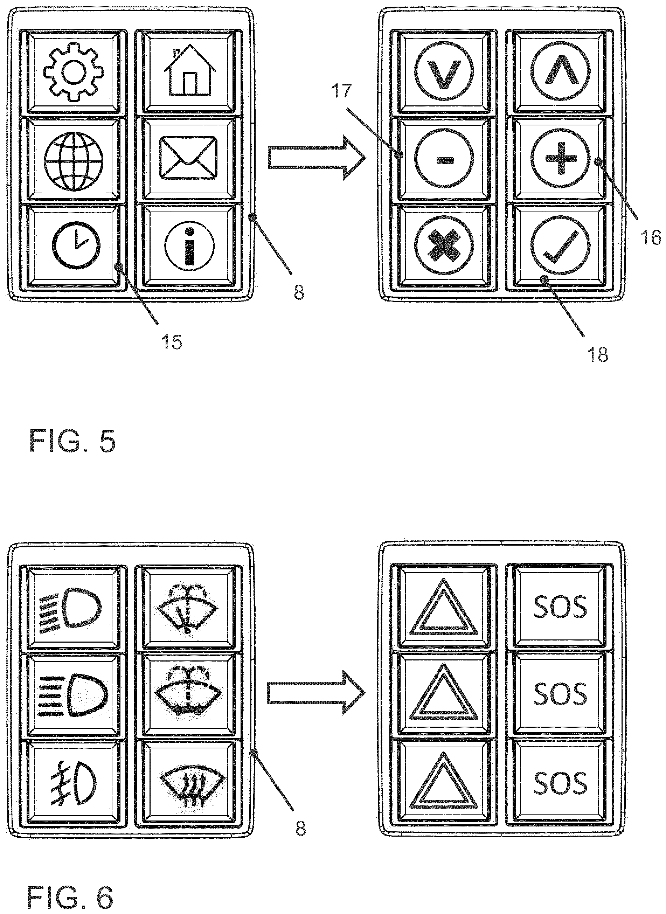

Ein erstes Anwendungsbeispiel für ein Modul mit sechs Bedienelementen in einer 2 x 3 Anordnung ist in Figur 5 schematisch dargestellt. Auf jedem der Bedienelemente wird im linken Menü ein anderes Symbol gezeigt. So kann durch Betätigung des Bedienelements 15, auf welchem ein Uhrsymbol dargestellt wird, die Uhr eingestellt werden. Wenn eine solche Betätigung durch den Fahrzeugnutzer erfolgt, so ändern sich die Darstellungen auf den Bedienelementen und es werden nun verschiedene Symbole, die Funktionen zur Einstellung der Uhrfunktion wiederspiegeln, angezeigt.

Drückt der den Fahrzeugnutzer nun das Bedienelement 16, welches ein "+"-Symbol anzeigt, so wird die Uhrzeit erhöht. Gleichzeitig wird durch den Piezoaktuator des Bedienelements 16 eine haptische Rückmeldung an den Fahrzeugnutzer ausgegeben die allmählich stärker wird. Ebenso kann die Uhrzeit zurückgestellt werden indem das Bedienelement 17, welches ein "-"-Symbol trägt, gedrückt wird, wobei dann die haptische Rückmeldung an den Fahrzeugnutzer allmählich schwächer wird. Der Einstellvorgang kann dann durch Drücken des Bedienelements 18 abgeschlossen werden. Zur Bestätigung kann durch den Piezoaktuator des Bedienelements 18 diese Taste zum Vibrieren gebracht werden. Da nun die Funktionen zur Einstellung der Uhrfunktion nicht weiter benötigt werden, werden im Anschluss darauf auf den Bedienelementen wieder die ursprünglich dargestellten Symbole angezeigt.

Ein weiteres Anwendungsbeispiel ist in Figur 6 dargestellt. Hierbei wird zunächst wieder in Form eines Menüs auf jedem der Bedienelemente ein anderes Symbol gezeigt, in diesem Fall bezogen auf Licht- Scheibenwischer- und Belüftungseinstellungen. Ohne das eine Betätigung eines der Bedienelemente durch den Fahrzeugnutzer erfolgt, wird bei einem Unfall die Funktion der Bedienelemente und Darstellungen auf den Bedienelementen geändert. Hierbei kann der Unfall des Fahrzeugs beispielsweise über das Auslösen eines Airbags detektiert werden. In diesem Fall werden entsprechende Darstellungen wie Achtungszeichen oder ein SOS-Schriftzug auf den Displays sämtlicher Bedienelemente dargestellt so dass der Fahrzeugnutzer mit einer beliebigen dieser Bedienelemente einen Notfall-Modus auslösen kann und beispielsweise über eine Mobilfunkverbindung einen Notruf absetzen kann. Auf diese Bedienelemente hat der Fahrzeugnutzer einen besseren und schnelleren Zugang im Vergleich zu einer herkömmlichen Notfall- oder SOS-Taste, die ggfs. nicht so gut zu erreichen und wegen der sehr seltenen Nutzung in einer Unfallsituation nicht gleich auffindbar sind.

Die verschiedenen Funktionalitäten, Darstellungen und Formen der haptischen Rückkopplung der Bedienelemente kann werkseitig bereits vor Auslieferung des Fahrzeugs programmiert werden. Es ist aber auch möglich, neue Funktionen für die Bedienelemente mittels eines Software-Updates beispielsweise über ein Mobilfunknetz in das Fahrzeug zu laden. Ebenso kann vorgesehen werden, Funktionen vorzusehen, die nur bei bestimmten geografischen Positionen des Fahrzeugs verfügbar sind, beispielsweise um das Öffnen des Kofferraums des Fahrzeugs nur zu Hause zu ermöglichen.

### Bezugszeichenliste

- 1: Bedienelement für eine Fahrzeugkomponente
- 2: elektronische Anzeigeeinheit
- 3: Bedienelementgehäuse
- 4: Führungen am Bedienelementgehäuse
- 5: Stellglied
- 6: elektrische Kontakte
- 7: Stifte
- 8: Modul mit sechs Bedienelementen in einer 2 x 3 Anordnung
- 9: Modulgehäuse
- 10: Führungen am Modulgehäuse
- 11: Befestigungselemente
- 12: Hebel
- 13: Kraftsensor
- 14: Steuereinheit
- 15: Bedienelement zur Anwahl der Uhrfunktionen
- 16 - 18: Bedienelemente zur Einstellung von Uhrfunktionen

## Patentansprüche

1. Modul für ein Fahrzeug, wobei mehrere einzelne Bedienelemente in dem Modul zusammengefasst und in einem gemeinsamen Modulgehäuse (9) angeordnet sind, wobei die einzelnen Bedienelemente jeweils eine Betätigungseinheit zum Erzeugen eines elektrischen Steuersignals für eine Fahrzeugkomponente, eine elektronische Anzeigeeinheit (2) zum Darstellen einer dem Bedienelement zugeordneten Anzeige und ein Stellglied (5) zur Erzeugung einer haptischen Rückmeldung an einen Fahrzeugnutzer in Reaktion auf eine Betätigung der Betätigungseinheit umfassen und wobei die einzelnen Bedienelemente derart separat programmiert und angesteuert werden können, dass je nach der dem jeweiligen Bedienelement zugeordneten Funktion unterschiedliche Anzeigen auf der elektronischen Anzeigeeinheit dargestellt und/oder unterschiedliche haptischen Rückmeldungen erzeugt werden können.

2. Modul nach Anspruch 1, wobei in Reaktion auf eine Betätigung der Betätigungseinheit eines Bedienelementes dieses Bedienelement derart umprogrammiert wird, dass eine von der ersten Anzeige verschiedene zweite Anzeige auf der elektronischen Anzeigeeinheit dargestellt und/oder eine von der ersten haptischen Rückmeldung verschiedene zweite haptische Rückmeldung erzeugt wird.

3. Modul nach einem der vorhergehenden Ansprüche, wobei die elektronische Anzeigeeinheiten der einzelnen Bedienelemente jeweils als OLED-, MicroLED- oder LCD-Display ausgestaltet sind.

4. Modul nach einem der vorhergehenden Ansprüche, wobei auf den elektronischen Anzeigeeinheiten der einzelnen Bedienelemente jeweils ein Bildsymbol dargestellt wird, das eine dem Bedienelement zugeordnete Funktion wiedergibt.

5. Modul nach einem der vorhergehenden Ansprüche, wobei die Stellglieder zur Erzeugung einer haptischen Rückmeldung der einzelnen Bedienelemente jeweils als Piezoaktuator, Vibrationsmotor oder ein anderes mechanisch verformbares Element ausgestaltet sind.

6. Modul nach einem der vorhergehenden Ansprüche, wobei die Betätigungseinheiten der einzelnen Bedienelemente jeweils einen Kraftsensor (13) oder Annäherungssensor zur Erfassung der Betätigung durch den Fahrzeugnutzer aufweisen.

7. Modul nach einem der Ansprüche 1 bis 6, wobei die elektronischen Anzeigeeinheiten der einzelnen Bedienelemente jeweils als berührungsempfindlicher Bildschirm ausgestaltet sind und die Betätigung durch den Fahrzeugnutzer mittels einer Berührung des berührungsempfindlichen Bildschirms erfolgt.

8. Modul nach einem der Ansprüche 1 bis 6, wobei die Betätigungseinheiten der einzelnen Bedienelemente jeweils als mechanischer Druckknopf ausgestaltet sind.

9. Modul nach einem der vorhergehenden Ansprüche, wobei die einzelnen Bedienelemente jeweils ein separates Bedienelementgehäuse (3) aufweisen und die Bedienelementgehäuse voneinander separiert in dem gemeinsamen Modulgehäuse (9) angeordnet sind.

10. Modul nach einem der vorhergehenden Ansprüche, wobei eine Steuereinheit (14) vorgesehen ist mittels der die mehreren Bedienelemente separat angesteuert werden können und welches das elektrische Steuersignal erzeugt.

## Claims

1. Module for a vehicle, wherein a plurality of individual operator control elements are combined in the module and are arranged in a common module housing (9), wherein the individual operator control elements each comprise an actuating unit for generating an electrical control signal for a vehicle component, an electronic display unit (2) for presenting a display associated with the operator control element, and an actuator (5) for generating haptic feedback to a vehicle user in response to an actuation of the actuating unit, and wherein the individual operator control elements can be separately programmed and activated in such a manner that different displays can be presented on the electronic display unit and/or different haptic feedback can be generated depending on the function associated with the operator control element in question.

2. Module according to Claim 1, wherein, in response to an actuation of the actuating unit of an operator control element, said operator control element is reprogrammed in such a manner that a second display which is different from the first display is presented on the electronic display unit and/or a second haptic feedback different from the first haptic feedback is generated.

3. Module according to either of the preceding claims, wherein the electronic display units of the individual operator control elements are each configured as an OLED, micro-LED or LCD display.

4. Module according to one of the preceding claims, wherein a respective image symbol is presented on each of the electronic display units of the individual operator control elements, said image symbol reproducing a function associated with the operator control element.

5. Module according to one of the preceding claims, wherein the actuators for generating haptic feedback of the individual operator control elements are each configured as a piezo actuator, vibration motor or another mechanically deformable element.

6. Module according to one of the preceding claims, wherein the actuating units of the individual operator control elements each have a force sensor (13) or proximity sensor for sensing the actuation by the vehicle user.

7. Module according to one of Claims 1 to 6, wherein the electronic display units of the individual operator control elements are each configured as a touch-sensitive screen, and the actuation by the vehicle user takes place by touching the touch-sensitive screen.

8. Module according to one of Claims 1 to 6, wherein the actuating units of the individual operator control elements are each configured as a mechanical push button.

9. Module according to one of the preceding claims, wherein the individual operator control elements each have a separate operator control element housing (3), and the operator control element housings are arranged separately from one another in the common module housing (9) .

10. Module according to one of the preceding claims, wherein a control unit (14) is provided by means of which the plurality of operator control elements can be activated separately and which generates the electrical control signal.

## Revendications

1. Module pour un véhicule, dans lequel plusieurs éléments de commande individuels sont regroupés dans le module et disposés dans un boîtier de module commun (9), dans lequel les éléments de commande individuels comprennent respectivement une unité d'actionnement pour générer un signal de commande électrique pour un composant de véhicule, une unité d'affichage électronique (2) pour représenter un affichage associé à l'élément de commande et un actionneur (5) pour générer un retour haptique pour un utilisateur du véhicule en réaction à un actionnement de l'unité d'actionnement, et dans lequel les éléments de commande individuels peuvent être programmés et pilotés séparément de telle sorte que selon la fonction associée à l'élément de commande respectif, différents affichages peuvent être représentés sur l'unité d'affichage électronique et/ou différents retours haptiques peuvent être générés.

2. Module selon la revendication 1, dans lequel, en réaction à un actionnement de l'unité d'actionnement d'un élément de commande, ledit élément de commande est reprogrammé de telle sorte qu'un deuxième affichage, différent du premier affichage, est représenté sur l'unité d'affichage électronique, et/ou un deuxième retour haptique, différent du premier retour haptique, est généré.

3. Module selon l'une quelconque des revendications précédentes, dans lequel les unités d'affichage électroniques des éléments de commande individuels sont respectivement configurées sous la forme d'un écran OLED, micro-LED ou LCD.

4. Module selon l'une quelconque des revendications précédentes, dans lequel, sur les unités d'affichage électroniques des éléments de commande individuels, respectivement une icône est représentée qui représente une fonction associée à l'élément de commande.

5. Module selon l'une quelconque des revendications précédentes, dans lequel les actionneurs permettant de générer un retour haptique des éléments de commande individuels sont respectivement configurés sous la forme d'un actionneur piézoélectrique, d'un moteur vibrant ou d'un autre élément à déformation mécanique.

6. Module selon l'une quelconque des revendications précédentes, dans lequel les unités d'actionnement des éléments de commande individuels présentent respectivement un capteur de force (13) ou un capteur de proximité pour détecter l'actionnement par l'utilisateur du véhicule.

7. Module selon l'une quelconque des revendications 1 à 6, dans lequel les unités d'affichage électroniques des éléments de commande individuels sont respectivement configurées sous la forme d'un écran tactile, et l'actionnement par l'utilisateur du véhicule est effectué au moyen d'un contact avec l'écran tactile.

8. Module selon l'une quelconque des revendications 1 à 6, dans lequel les unités d'actionnement des éléments de commande individuels sont configurées respectivement sous la forme d'un bouton-poussoir mécanique.

9. Module selon l'une quelconque des revendications précédentes, dans lequel les éléments de commande individuels présentent respectivement un boîtier d'élément de commande séparé (3), et les boîtiers d'élément de commande sont disposés dans le boîtier de module commun (9) en étant séparés les uns des autres.

10. Module selon l'une quelconque des revendications précédentes, dans lequel une unité de commande (14) est prévue qui permet de piloter séparément les plusieurs éléments de commande et qui génère le signal de commande électrique.
